Europäisches Patentamt

European Patent Office

Office européen des brevets

(19)

(11) Veröffentlichungsnummer: **0 263 239**
**A1**

## (12) EUROPÄISCHE PATENTANMELDUNG

(21) Anmeldenummer: **87108463.8**

(22) Anmeldetag: **11.06.87**

(51) Int. Cl.4: **F16L 3/00 , B23Q 1/00**

(30) Priorität: **30.09.86 DE 3633151**

(43) Veröffentlichungstag der Anmeldung:
**13.04.88 Patentblatt 88/15**

(84) Benannte Vertragsstaaten:
**AT BE DE FR GB IT NL**

(71) Anmelder: **Uhde GmbH**
**Friedrich-Uhde-Strasse 15**
**D-4600 Dortmund 1(DE)**

(72) Erfinder: **Einhaus, Rolf**
**Walzweg 3b**
**D-5750 Menden 2(DE)**
Erfinder: **Kötting, Eberhard, Dipl.-Ing.**
**Im Grund 4**
**D-5805 Breckerfeld(DE)**
Erfinder: **Minning, Rudolf**
**Althoffstrasse 3**
**D-4600 Dortmund 1(DE)**

(74) Vertreter: **Patentanwälte Meinke und**
**Dabringhaus Dipl.-Ing. J. Meinke Dipl.-Ing. W.**
**Dabringhaus**
**Westenhellweg 67**
**D-4600 Dortmund 1(DE)**

(54) Flexible Rohrleitung, insbesondere zur Zuführung eines Hochdruckmediums.

(57) Mit einer flexiblen Rohrleitung. insbesondere zur Zuführung eines Hochdruckmediums von einer stationären Druckmittelquelle zu einem beweglichen Druckmittelverbraucher, insbesondere zu einer ein Werkstück bearbeitenden Hochdruck-Schneiddüse, soll eine Lösung geschaffen werden, mit der eine flexible Rohrleitung bereitgestellt wird, die den gewünschten Anforderungen gerecht wird, die insbesondere den sehr hohen Drücken standhält und die benötigte Flexibilität aufweist.

Dies wird dadurch erreicht, daß die Rohrleitung (1) aus Federeigenschaften aufweisendem Material gebildet ist und zwischen geraden Abschnitten (1a) gebogene Bereicht (1b) aufweist.

Fig. 1

## "Flexible Rohrleitung, insbesondere zur Zuführung eines Hochdruckmediums"

Die Erfindung richtet sich auf eine flexible Rohrleitung, insbesondere zur Zuführung eines Hochdruckmediums, von einer stationären Druckmittelquelle zu einem beweglichen Druckmittelverbraucher, insbesondere zu einer ein Werkstück bearbeitenden Hochdruck-Schneiddüse.

Es ist bekannt, mittels eines unter relativ hohem Druck stehenden Wasserstrahles Werkstücke zu bearbeiten, insbesondere zu schneiden. Dabei wird hochverdichtetes Wasser mit z. B. einem Vordruck von 4000 bar über eine Saphirdüse mit Durchmesser von 0,1 bis 0,3 mm entspannt. Der dabei entstehende energiereiche Strahl wird zum Bearbeiten der Werkstücke benutzt. Bei dem Bestreben, die Palette der zu bearbeitenden Werkstücke bzw. Materialien zu erweitern, werden auch höhere Drücke notwendig, so werden heute schon Drücke bis zu 10000 bar erreicht, die Entwicklung von Drücken bis zu 20000 bar und deren Beherrschung ist nicht ausgeschlossen.

Die zum Einsatz kommenden Schneidvorrichtungen können in Art von Roboterarmen mit mehreren Freiheitsgraden ausgerüstet sein. sie können aber auch als aus der Schweißtechnik bekannte Schneidtische gestaltet sein, insbesondere bei der Durchführung von Schneidarbeiten mit häufiger Richtungsänderung des Schneidkopfes sind derartige Geräte computergesteuert.

Um nun eine möglichst unbegrenzte oder weitestgehend unbegrenzte Bewegungsfreiheit des Schneidkopfes zu gewährleisten, muß auch die Druckmittelzuführleitung den gestellten Anforderungen gerecht werden. Sind bei niedrigen Drücken noch Rohrleitungen möglich, die im wesentlichen aus flexiblen Spiralschläuchen aus einem nichtmetallischen Werkstoff bestehen, so ist dies bei den hier in Rede stehenden Drükken nicht mehr möglich.

Aufgabe der Erfindung ist die Schaffung einer Lösung, mit der Rohrleitungen bereitgestellt werden, die den gewünschten Anforderungen gerecht werden, die insbesondere den sehr hohen Drücken standhalten und die benötigte Flexibilität aufweisen.

Mit einer flexiblen Rohrleitung der eingangs bezeichneten Art wird diese Aufgabe gemäß der Erfindung dadurch gelöst, daß die Rohrleitung aus Federeigenschaften aufweisendem Material gebildet ist und zwischen geraden Abschnitten gebogene Bereiche aufweist.

Es hat sich gezeigt, daß die bekannten Spiralwicklungen von Leitungen der hier gestellten Anforderung nicht ge recht werden, wären sie aus Federstahl gefertigt, würden sie auf kurzen Strecken so schwer, daß ihr Einsatz praktisch unmöglich ist. Andererseits ist die Führung eines so kompakten, dreidimensionalen Schlauchsystems sehr - schwierig, der Materialeinsatz ist extrem hoch. Dies alles wird mit der vorliegenden Erfindung vermieden.

In Ausgestaltung sieht die Erfindung vor, daß die geraden Abschnitte und die gebogenen Bereiche im wesentlichen in einer gemeinsamen Ebene liegen. Es hat sich gezeigt, daß diese Gestaltung besonders vorteilhaft ist, da bei den Federeigenschaften des die Rohrleitung bildenden Materials eine gewisse Eigensteifigkeit in der gemeinsamen Ebene vorliegt, ohne daß damit verhindert würde, daß die Leitung am Ende in allen drei Raumrichtungen bewegbar wäre: Das Federn ermöglicht die Bewegung nach oben und unten. vorne und hinten innerhalb der gemeinsamen Ebene, die Art der Wicklung ermöglicht gleichzeitig das Auslenken des freien Endes aus der Ebene heraus.

Als zweckmäßig hat sich erwiesen, wenn die gebogenen Bereiche zwischen den geraden Abschnitten jeweils als Vollkreis -Schlaufe ausgebildet sind, wobei eine abgewandelte Gestaltung der Erfindung darin besteht, daß die geraden Abschnitte und gebogenen Bereiche mäanderähnlich aneinander gereiht sind.

Beiden Gestaltungen ist gemeinsam, daß sich die im wesentlichen gemeinsame Ebene leicht definieren und einhalten läßt, wobei hier als gemeinsame Ebene auch diejenige Ebene gelten soll. die die Vollkreisschlaufen einnehmen. obgleich sie geringfügig aus einer mathematisch definierten Ebene ausgelenkt sind.

Wenn z. B. in Schneidautomaten, die mit einer Schneideinrichtung ähnlich der Trenntische bei Schweißbrennern ausgerüstet sind, im wesentlichen zwei Bewegungsebenen des Schneidkopfes notwendig sind. so kann es zweckmäßig sein. die Rohrleitung mit Stabilisierungselementen auszurüsten, welche die bei einer bestimmten Verfahrbewegung des Druckmittelverbrauchers einnehmbare Form der Rohrleitung begrenzen.

Derartige Stabilisierungselemente können z. B. von Leitblechen gebildet sein. die in Abstand zueinander die Bewegung der Rohrleitung innerhalb dieses begrenzten Raumes ermöglichen, ein seitliches Abkippen aus der Bewegungsebene aber verhindern.

In einer anderen Gestaltung sieht die Erfindung vor, daß die Stabilisierungselemente als die Rohrleitungswicklungen aufnehmende und führende Kettenglieder ausgebildet sind.

Die Erfindung ist nachstehend anhand der Zeichnung beispielsweise näher erläutert. Diese zeigt in

Fig. 1 eine vereinfacht wiedergegebene räumliche Darstel lung der Rohrleitung,

Fig. 2 eine Seitenansicht gemäß Pfeil II in Fig. 1,

Fig. 3 eine Seitenansicht einer mit Schlaufen versehenen Rohrleitung,

Fig. 4 eine Seitenansicht einer mäanderförmig ausgebilde ten Rohrleitung sowie in

Fig. 5 die Seitenansicht einer Rohrleitung mit kettengliederartigen Stabilisierungselementen in der Seitenansicht und in der Draufsicht.

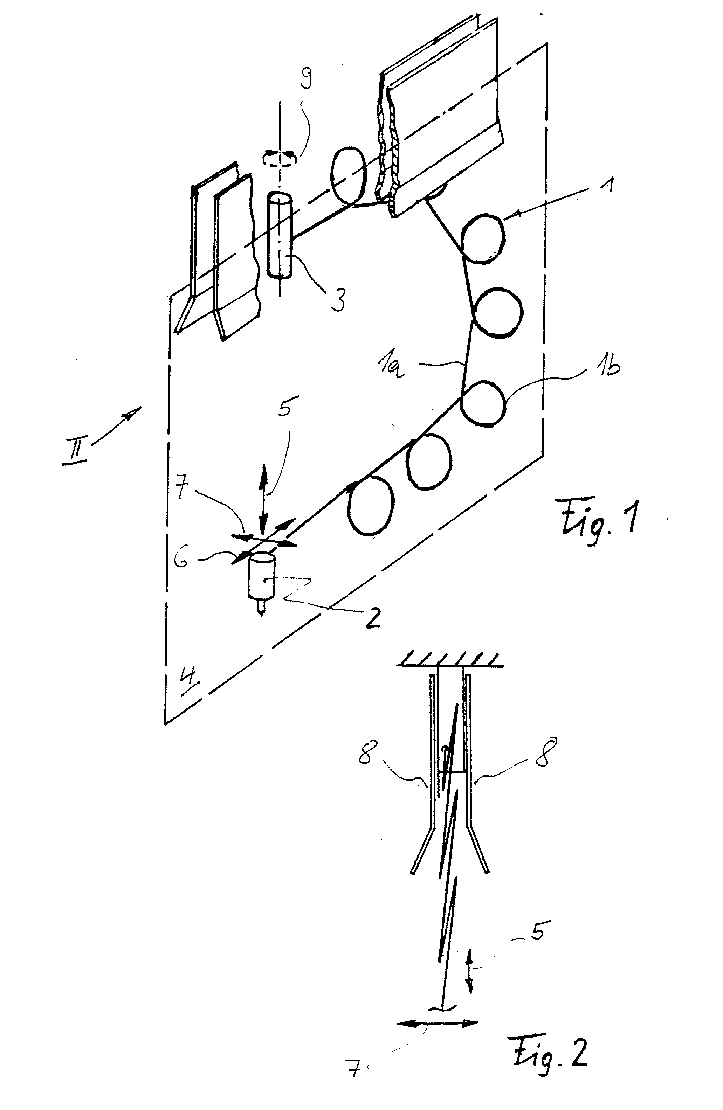

Die in Fig. 1 vereinfacht räumlich wiedergegebene Rohrleitung 1 dient zur Zuführung eines förderbaren Mediums zu einem Verbraucher, der im dargestellten Beispiel als Wasserstrahlschneidkopf 2 dargestellt ist. Die Wasserquelle bzw. die Druckmittelquelle ist nicht näher dargestellt, vielmehr ist in Fig. 1 nur noch ein Ventil 3 angegeben. aus dem heraus die Leitung 1 geführt ist.

Wie erkennbar ist die Rohrleitung aus geraden Abschnitten 1a und gekrümmten Abschnitten 1b gebildet, die im wesentlichen so angeordnet sind, daß sie in einer in Fig. 1 gestrichelt wiedergegebenen gedachten Ebene 4 liegen. Damit ist der Schneidkopf 2 zunächst in der Ebene 4 nach oben und unten bewegbar, was mit dem Doppelpfeil 5 dargestellt ist, in gleicher Weise ist er in der Ebene nach vorne und hinten bewegbar, was mit dem Doppelpfeil 6 kenntlich. gemacht ist. Da erfindungsgemäß die Rohrleitung aus einem Federeigenschaften aufweisenden Material besteht, ist der Schneidkopf 2 aber auch aus der Ebene heraus bewegbar, was durch einen Doppelpfeil 7 dargestellt sein soll.

Soweit wie möglich sind diese Pfeile auch in Fig. 2 angedeutet, die eine Draufsicht darstellt, und aus der erkennbar wird, daß die Ebene 4 eine rein theoretische Ebene darstellen soll, durch die Schlaufen 1b ist die Rohrleitung ein dreidimensionales Gebilde, da diese Schlaufen geringfügig aus einer idealen Ebene heraus angeordnet sind.

Soll allerdings die Bewegung in Richtung des Doppelpfeiles 7 eingeschränkt werden, ohne daß eine derartige Bewegung aufgrund der konstruktiven Eigenarten der entsprechenden Vorrichtung völlig entbehrlich, so kann die Rohrleitung 1 auch in Führungen angeordnet werden, wie dies in den Fig. 1 und 2 angedeutet ist. Hier handelt es sich um auf Abstand gehaltene Leitbleche 8, die eine zu starke Auslen kung in dieser Richtung verhindern.

Eine grundsätzliche Verschwenkbarkeit der Rohrleitung 1 mit der Ebene 4 ist in Fig. 1 oben im Bereich des Ventiles mit einem Kreisdoppelpfeil 9 angedeutet. Diese Bewegungsmöglichkeit ist dann gegeben, wenn die Leitbleche 8 nicht vorhanden sind. Eingesetzt wird diese Möglichkeit einer Kreisbewegung beispielsweise bei der Ausrüstung eines Roboterarmes mit einem entsprechenden Schneidkopf 2, wobei der Roboterarm bei festem Standort sämtliche im Raum verfügbaren Freiheitsgrade auszuüben in der Lage ist.

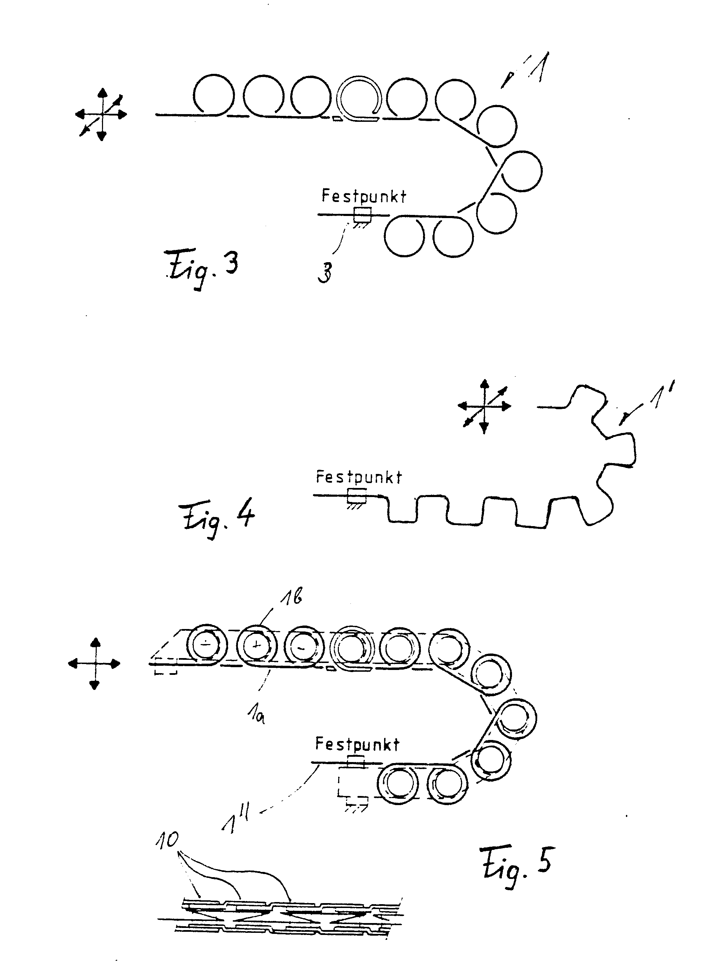

In Fig. 3 ist eine Anordnung der Rohrleitung 1 dargestellt, bei der sich der Festpunkt oder das Ventil 3 unten befindet, um anzudeuten, daß die Erfindung nicht darauf beschränkt ist, daß die Druckmittelquelle oberhalb des Werkzeuges 2 angeordnet sein muß.

Fig. 4 zeigt die Möglichkeit, statt des Wechsels von geraden und gebogenen Bereichen als Vollkreise diesen Wechsel mäanderförmig vorzunehmen. Die gebogenen Abschnitte tragen hier kein besonderes Bezugszeichen.

Schließlich zeigt die Fig. 5 eine Seitenansicht und Draufsicht die Möglichkeit. eine Rohrleitung 1" in kettengliederähnlichen Elementen 10 unterzubringen, um so eine optimale Führung der Leitungswindungen zu erreichen. Diese Ge staltung bietet sich insbesondere dann an, wenn z. B. Werkzeugmaschinen unter anderem definierte Hin- und Herbewegungen durchführen müssen, diese Bewegung kann dann von den Kettengliedern mitsamt der Rohrleitung 1" ausgeführt werden.

Diese Halblagerung soll gerade die Bewegung in einer dritten Richtung unterbinden, so daß hier nur ein aus Doppelpfeilen bestehendes Kreuz angegeben ist, während die Dreifachpfeile in Fig. 3 und 4 die Bewegungsmöglichkeit im Raum andeutet.

Natürlich ist das beschriebene Ausführungsbeispiel der Erdingung noch in vielfacher Hinsicht abzuändern, ohne den Grundgedanken der Erfindung zu verlassen, so ist die Erfindung insbesondere nicht auf den Einsatz als Hochdruckleitung beschränkt, selbstverständlich kann mit der gleichen Gestaltung auch Medien niedriger Drücke gefördert werden.

## Ansprüche

1. Flexible Rohrleitung, insbesondere zur Zuführung eines Hochdruckmediums von einer stationären Druckmittelquelle zu einem beweglichen Druckmittelverbraucher, insbesondere zu einer ein Werkstück bearbeitenden Hochdruck-Schneiddüse, dadurch gekennzeichnet, daß die Rohrleitung (1) aus Federeigenschaften aufweisendem Material gebildet ist und zwischen geraden Abschnitten (1a) gebogene Bereiche (1b) aufweist.

2. Rohrleitung nach Anspruch 1,
dadurch gekennzeichnet,
daß die geraden Abschnitte (1a) und die gebogenen Bereiche (1b) im wesentlichen in einer gemeinsamen Ebene (4) liegen.

3. Rohrleitung nach Anspruch 1 oder 2,
dadurch gekennzeichnet,
daß die gebogenen Bereiche zwischen den geraden Abschnitten jeweils eine Vollkreis-Schlaufe (1b) bilden.

4. Rohrleitung nach Anspruch 1 oder 2,
dadurch gekennzeichnet,
daß gerade Abschnitte und gebogene Bereiche mäanderähnlich aneinandergereiht sind.

5. Rohrleitung nach Anspruch 1 oder einem der folgenden,
dadurch gekennzeichnet,
daß diese mit Stabilisierungselementen (8) ausgerüstet ist, welche die bei einer bestimmten Verfahrbewegung des Druckmittelverbrauchers einnehmbare Form der Rohrleitung (1) begrenzen.

6. Rohrleitung nach Anspruch 5,
dadurch gekennzeichnet,
daß die Stabilisierungselemente als die Rohrleitungswicklungen (1a, 1b) aufnehmende und führende Kettenglieder (10) gebildet sind.

7. Rohrleitung nach einem der vorangehenden Ansprüche,
dadurch gekennzeichnet,
daß sie an ihrem dem Druckmittelverbraucher abgewandten Ende in einem die Verdrehung in der Horizontalebene bildenden Ventil befestigt ist.

Fig. 1

Fig. 2

Festpunkt

*Fig. 3*

3

Festpunkt

*Fig. 4*

1'

16

1a

Festpunkt

1''

10

*Fig. 5*

Europäisches
Patentamt

EUROPÄISCHER RECHERCHENBERICHT

Nummer der Anmeldung

EP  87 10 8463

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 475 831  (CITROEN) <br> * Figuren 1-5; Seite 3, letzter Absatz - Seite 4, Absatz 1 * <br> --- | 1-3 | F 16 L    3/00 <br> B 23 Q    1/00 |
| A | GB-A-2 065 253  (ROLLS-ROYCE MOTORS) <br> * Figuren 2-7 * <br> --- | 1-3 | |
| X | US-A-3 701 551  (MORGAN) <br> * Spalte 2, Zeilen 18-22; Figuren 2,3 * <br> --- | 1 | |
| A | FR-A-1 511 435  (HONEYWELL INC.) <br> * Figuren 1,2 * <br> --- | 4 | |
| A | US-A-3 330 105  (C.H. WEBER) <br> * Figuren 1,2 * <br> --- | 6 | |
| A | TECHNISCHE RUNDSCHAU, Band 78, Nr. 17, April 1986, Seiten 44,45,47-49, Bern, CH; F.A. BOSSHARD: "Roboterisiertes Wasserstrahlschneiden von Composite-Teilen" <br> * Insgesamt * <br> ----- | | RECHERCHIERTE SACHGEBIETE (Int. Cl.4) <br><br> F 16 L <br> B 23 Q |

Der vorliegende Recherchenbericht wurde für alle Patentansprüche erstellt

| Recherchenort | Abschlußdatum der Recherche | Prüfer |
|---|---|---|
| DEN HAAG | 14-12-1987 | BARTSCH A.W. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
..............................................................................
& : Mitglied der gleichen Patentfamilie, übereinstimmendes
    Dokument

EPO FORM 1503 03.82 (P0403)